# EUROPEAN PATENT SPECIFICATION

(11) **EP 0 786 053 B1**
(45) Date of publication and mention of the grant of the patent: **26.01.2000**
(21) Application number: 95935642.9
(22) Date of filing: 18.10.1995
(51) Int. Cl.: F16B 12/40, F16B 7/14

(54) **LOCKING DEVICE**
VERRIEGELUNGSVORRICHTUNG
DISPOSITIF DE BLOCAGE

(30) Priority: 18.10.1994 SE 9403559
(43) Date of publication of application: 30.07.1997
(73) Proprietor: MERCADO MEDIC AB, S-181 22 Lidingö (SE)
(72) Inventor: DU REES, Stephan, S-181 62 Lidingö (SE)
(74) Representative: Bjelkstam, Peter
(86) International application number: SE9501224
(87) International publication number: WO9612113

(56) References cited:
- WO-A-86/03562
- SE-B- 428 243
- US-A- 3 463 520

## Description

The present invention relates to a locking device for parts, which are movable in tables and chairs, as well as being positionally adjustable and lockable in desired, mutual relationship, by displacement of at least one supporting rod carrying the respective part, this rod being accommodated in a guide tube rigidly fixable to the supporting frame of a chair or table, there being in the tube at least one positionally fixed sleeve closely fitting round the rod, which is locked to the sleeve in a desired position with the aid of friction achieved by a compressive force appliable to the sleeve. Such a device is known, for example, from US-A-3 463 520.

A usually available, movable part in chairs is an armrest, for example, which may be adjustable in height. At present, locking means are most often used to positionally fix the armrest with the aid of locking screws, which may be screwed into guide tubes on the chair frame, such as to lock the armrest in its desired position by bearing directly on the respective support rod carrying the armrest. This causes ugly marks on the rod. There are different arrangements for solving this problem, inter alia by fitting an intermediate sleeve in the guide tube, but these arrangements have proved less reliable or expensive in fabrication. There are the same problems in positionally fixing other movable parts of chairs and tables, e.g. depth adjustment means for back supports, locking means for leg supports, knee supports and other adjustable parts included in chair and table structures.

The object of the invention is to provide a device of the kind mentioned above, where the disadvantages present up to now have been eliminated. The distinguishing features of the invention are disclosed in the accompanying claims.

As a result of the invention, there has been achieved a locking device for movable parts included in chairs and tables, which in an excellent way fulfils its objectives, while it is also simple and cheap to manufacture. By the special implementation of the sleeve included in the device and situated in the guide tube, there is afforded, in accordance with the invention, very gentle engagement against the supporting rod carrying the part in question, when the rod is positionally fixed by a locking screw simultaneously as reliable, positional fixation of the part is attained. This is due, inter alia, to the great flexibility of the sleeve in the guide tube, this sleeve being adapted for locking the part to the supporting frame of a chair or table.

The invention will now be described in more detail, with the aid of two preferred embodiment examples of the invention and with reference to the accompanying drawing, where:
- Fig. 1: is a schematic, perspective view of a chair having an armrest which is adjustable in height, an inventive locking device for positional fixation of the armrest also being shown,
- Fig. 2: is a partial view of the device in Fig. 1, seen from above,
- Fig. 3: illustrates the device of Fig. 2 to a larger scale,
- Fig. 4: is a partially sectioned, schematic side view of an alternative embodiment, where the sleeve is accommodated centrally in the guide tube, with guide bushes fitted into either end of the guide tube,
- Fig. 5: is a schematic perspective view of the sleeve illustrated in Figs. 2 and 3 and
- Fig. 6: is a schematic, perspective view of a sleeve implemented in an alternative configuration.

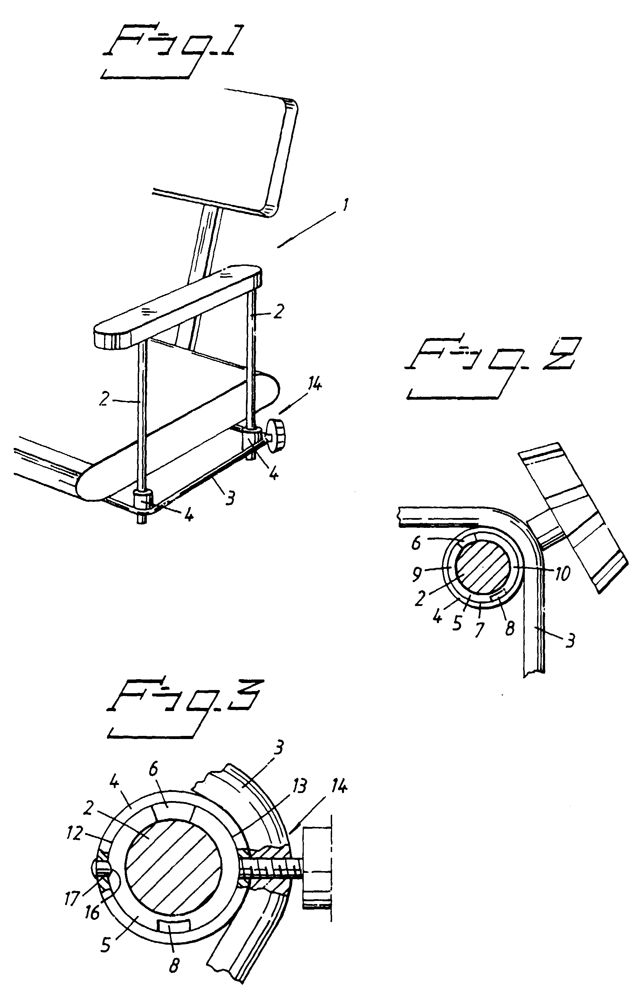

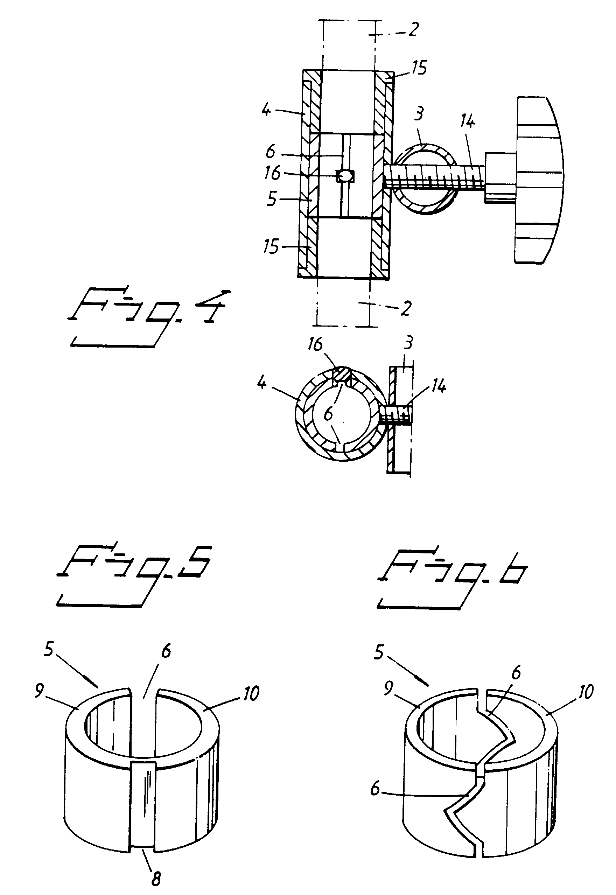

The inventive device comprises a locking means for movable parts included in tables and chairs. According to a preferred embodiment example illustrated in Figs. 1-3, a movable armrest 1 is adjustable to, and lockable at a desired height, which is accomplished in the following manner. At least one supporting rod 2 for the armrest 1 is accommodated within a guide tube 4 rigidly attached to the chair seat supporting frame 3. In the tube 4 there is at least one positionally fixed sleeve 5 fitting closely round the rod 2, and adapted to lock it at a desired height with the aid of friction generated by applying a compressive force against the sleeve 5. In this embodiment the latter has a full-length slot 6, opposite to which there is a full-length groove 8 in the cylindrical surface 7 of the sleeve, which thus substantially comprises two circular portions 9 and 10. These portions can be urged against their resilience from their original positions engaging the inside wall of the tube 4 in a direction towards each other. This movement will take place when the compressive force is applied to the outer curved surface 12, 13 of one or other of the circular portions 9; 10, thus locking the supporting rod 2 in its assumed position.

In an alternative embodiment illustrated in Fig. 6, the sleeve 5 may have both its circular portions 9 and 10 separated by diametrically opposing slots 6. To provide an axial fixation of the sleeve 5 in the tube 4, at least the edge portions of the circular portions 9 and 10 have the configuration of tongues projecting into corresponding recesses.

The compressive force against the sleeve 5 is achieved by a locking screw 14 extending through guide sleeve 4 and support frame 3, such as to bear on the outer cylindrical surface 12, 13 of the sleeve when screwed into the frame 3.

As will be seen in more detail in Fig. 5, in one embodiment of the sleeve 5 there is a groove 8 extending parallel to the symmetrical axis of the sleeve for its entire length. The groove has a rectangular cross-section corresponding to that of a keyway and has a depth preferably greater than two-thirds of the sleeve thickness. The sleeve is preferably made from a suitable steel that will withstand the concentrated pressure exerted by the screw 14, and it is positionally fixed inside the tube 4 by a protuberance 16, which may be provided by weld through a hole 17 in the tube 4. This may also apply to the embodiment in Fig. 6 as well. The sleeve is thus prevented from rotational or axial movement in the tube 4. As a result of providing groove 8 the sleeve will be sufficiently flexible to enable a desired locking force for the supporting rod 2 to be readily applied by tightening the locking screw 14. The width of the slot or gap 6 is made sufficient for the mutually opposing movements of the portions 9 and 10 when the armrest is locked at its desired height.

In the alternative embodiment of the device as illustrated in Fig. 4, the sleeve 5 is shorter than that in the other embodiments, and it is placed centrally in the guide tube 4. In this case, a guide bush 15 is fitted at either end of the guide tube, i.e. on either side of the sleeve, this solution affording a more pleasing implementation of the device, since the bushes 15 are hidden inside the tube. This alternative embodiment otherwise functions in the same way as the first one. Even other not more closely described or illustrated embodiments of the inventive locking device may be used, as mentioned in the introduction, for locking movable chair or table parts together in desired, positionally fixed relationships.

## Claims

1. Locking device for parts which are movable in tables and chairs as well as being positionally adjustable and lockable in desired, mutual relationship, by displacement of at least one supporting rod (2) for carrying the respective part (1), this rod being accommodated in a guide tube (4) rigidly fixable to the supporting frame (3) of a chair or table, there being in the tube (4) at least one positionally fixed sleeve (5) closely fitting round the rod (2), which is locked to the sleeve in a desired position with the aid of friction achieved by a compressive force appliable to the sleeve, **characterized in** that the sleeve (5) includes two substantially similarly as great, part-circularly shaped portions (9, 10) delimited by at least two slot formations (6, 8) in diametrically opposed relationship, both of which extend the full length of the sleeve (5), said portions (9 and 10) being radially movable from original engagement against the inside (11) of the guide tube (4) in a direction towards, and away from each other inside said tube, when said compressive force affects the outer curved surface (12, 13) of the respective circularly shaped portion for respectively locking and releasing said rod (2).

2. Device as claimed in claim 1, **characterized in** that the slot formations comprise two diametrically opposing through slots (6), there also being formed an interlocking configuration between the mutually opposing edge portions of said sleeve (5), this configuration taking the form of at least one tongue and its corresponding recess.

3. Device as claimed in claim 1, **characterized in** that the slot formations comprise a through slot (6) and a groove (8) diametrically opposed to it, made in the curved surface (7) of the sleeve (5), both slot and groove extending the full length of said sleeve.

4. Device as claimed in claim 3, **characterized in** that the groove (8) made in the curved surface (7) of the sleeve (5) extends parallel to the longitudinal axis of symmetry of the sleeve and has a rectangular cross-section with a position and shape substantially conforming to that of a keyway.

5. Device as claimed in claim 4, **characterized in** that the depth of the groove (8) is greater than two-thirds of the sleeve thickness.

6. Device as claimed in any one of the preceding claims, **characterized in** that the compressive force is obtained using a locking screw (14) extending through guide tube (4) and supporting frame (3) for bearing against one of the outer curved surfaces (12, 13) of the sleeve (5).

7. Device as claimed in any one of the preceding claims, **characterized in** that the screw (14) may be caused to bear against a centrally situated area of one of the part-circularly shaped portions (9; 10) of the sleeve (5), the other portion (9; 10) being positionally fixed in the guide tube (4) with the aid of a protuberance (16).

8. Device as claimed in claim 1, **characterized in** that the guide tube (4) extends past the sleeve (5) at either end thereof for accommodating guide bushes (15) with the sleeve (5) situated therebetween.

## Patentansprüche

1. Verriegelungsvorrichtung für Teile, die in Tischen und Stühlen beweglich sind und deren Position auch in einer gewünschten gegenseitigen Beziehung einstellbar und verriegelbar ist durch eine Verschiebung von wenigstens einem abstützenden Stab (2) zum Tragen des betreffenden Teils (1), wobei dieser Stab in einem Führungsrohr (4) aufgenommen ist, welches an dem Abstützrahmen (3) eines Stuhles oder Tisches starr befestigbar ist, wobei sich in dem Rohr (4) wenigstens eine in der Positionierung befestigte Hülse (5) befindet, die eng um den Stab (2) herum eingepasst ist, welcher in einer gewünschten Position an der Hülse verriegelt ist mittels der Reibung, die durch eine auf die Hülse auszuübende Druckkraft erreicht ist, dadurch gekennzeichnet, daß die Hülse (5) zwei im wesentlichen gleich große, teilweise kreisförmig geformte Bereiche (9,10) aufweist, welche durch wenigstens zwei Schlitzausbildungen (6,8) mit einer diametral gegenüberliegenden Zuordnung begrenzt sind, die beide über die volle Länge der Hülse (5) verlaufen, wobei die Bereiche (9 und 10) radial beweglich sind aus einer ursprünglichen Wirkverbindung mit der Innenseite (11) des Führungsrohres (4) in einer Richtung gegen und weg voneinander innerhalb des Rohres, wenn die Druckkraft die äußere gekrümmte Oberfläche (12,13) des betreffenden kreisförmig geformten Bereichs für ein betreffendes Verriegeln und eine Freigabe des Stabes (2) beeinflußt.

2. Vorrichtung nach Anspruch 1, dadurch gekennzeichnet, daß die Schlitzausbildungen zwei diametral gegenüberliegende Durchgangsschlitze (6) aufweisen, wobei auch eine wechselseitig verriegelnde Gestaltung zwischen den wechselseitig gegenüberliegenden Kantenbereichen der Hülse (5) ausgebildet ist und diese Gestaltung die Ausbildung wenigstens einer Zunge und ihrer korrespondierenden Aussparung annimmt.

3. Vorrichtung nach Anspruch 1, dadurch gekennzeichnet, daß die Schlitzausbildungen wenigstens einen Durchgangsschlitz (6) und eine dazu diametral gegenüberliegende Nut (8) aufweisen, die in der gekrümmten Oberfläche (7) der Hülse (5) ausgebildet ist, wobei sowohl der Schlitz wie auch die Nut über die volle Länge der Hülse verlaufen.

4. Vorrichtung nach Anspruch 3, dadurch gekennzeichnet, daß die in der gekrümmten Oberfläche (7) der Hülse (5) ausgebildete Nut (8) parallel zu der Längssymmetrieachse der Hülse verläuft und einen rechteckigen Querschnitt aufweist mit einer Anordnung und Formgebung im wesentlichen übereinstimmend mit derjenigen einer Keilnut.

5. Vorrichtung nach Anspruch 4, dadurch gekennzeichnet, daß die Tiefe der Nut (8) größer ist als zwei Drittel der Dicke der Hülse.

6. Vorrichtung nach einem der vorhergehenden Ansprüche, dadurch gekennzeichnet, daß die Druckkraft erhalten ist durch die Verwendung einer Verriegelungsschraube (14), die durch das Führungsrohr (4) und den Abstützrahmen (3) hindurch verläuft zur Anlage gegen eine der äußeren gekrümmten Oberflächen (12,13) der Hülse (5).

7. Vorrichtung nach einem der vorhergehenden Ansprüche, dadurch gekennzeichnet, daß die Schraube (14) zur Anlage gegen einen zentral angeordneten Bereich eines der teilweise kreisförmig geformten Bereiche (9; 10) der Hülse (5) gezwungen werden kann, wobei die Position des anderen Bereichs (9; 10) mittels eines Vorsprunges (16) in dem Führungsrohr (4) befestigt ist.

8. Vorrichtung nach Anspruch 1, dadurch gekennzeichnet, daß das Führungsrohr (4) über jedes der beiden Enden der Hülse (5) vorsteht zur Aufnahme von Führungsbuchsen (15), zwischen denen die Hülse (5) angeordnet ist.

## Revendications

1. Dispositif de verrouillage pour des pièces qui sont mobiles dans des tables et des chaises et qui peuvent être verrouillées et ajustées en position suivant une relation mutuelle souhaitée par le déplacement d'au moins une tige (2) de support pour porter la pièce (1) respective, cette tige étant reçue dans un tube (4) de guidage pouvant être fixée rigidement au cadre (3) de support d'une chaise ou d'une table, au moins un manchon (5) fixe en position se trouvant dans le tube (4) en adaptation serré autour de la tige (2), tige (2) qui est verrouillée au manchon dans une position souhaitée à l'aide du frottement obtenu par une force en compression pouvant être appliquée au manchon, **caractérisé** en ce que le manchon (5) comporte deux pièces (9, 10) de forme en partie circulaire sensiblement de grandeur similaire et délimitées par au moins deux formations (6, 8) en fente diamétralement opposées, qui toutes les deux s'étendent sur toute la longueur du manchon (5), les pièces (9, 10) étant mobiles radialement à partir d'une coopération initiale contre l'intérieur (11) du tube (4) de guidage dans une direction l'une vers l'autre et dans une direction s'éloignant l'une de l'autre à l'intérieur du tube, lorsque la force en compression affecte la surface (12, 13) incurvée extérieure de la pièce de forme circulaire respective pour respectivement verrouiller et libérer la tige (2).

2. Dispositif suivant la revendication 1, **caractérisé** en ce que les formations en fente comporte deux fentes (6) de traversée diamétralement opposées, une configuration en verrouillage mutuel étant également formée entre les parties de bord mutuellement opposées du manchon (5), cette configuration prenant la forme d'au moins une languette et de son évidement correspondant.

3. Dispositif suivant la revendication 1, **caractérisé** en ce que les formations en fente comportent une fente (6) de traversée et une rainure (8) qui lui est diamétralement opposée, réalisées dans la surface (7) incurvée du manchon (5), la rainure et la fente s'étendant toutes les deux sur toute la longueur du manchon.

4. Dispositif suivant la revendication 3, **caractérisé** en ce que la rainure (8) réalisée dans la surface (7) incurvée du manchon (5) s'étend parallèlement à l'axe longitudinal de symétrie du manchon et a une section transversale rectangulaire avec une position et une forme se conformant sensiblement à celle d'un logement de clavette.

5. Dispositif suivant la revendication 4, **caractérisé** en ce que la profondeur de la rainure (8) est supérieure à deux tiers de l'épaisseur de manchon.

6. Dispositif suivant l'une quelconque des revendications précédentes, **caractérisé** en ce que la force en compression est obtenue en utilisant une vis (14) de verrouillage s'étendant dans le tube (4) de guidage et supportant le cadre (3) pour porter contre l'une des surfaces (12, 13) incurvées extérieures du manchon (5).

7. Dispositif suivant l'une quelconque des revendications précédentes, **caractérisé** en ce que la vis (14) peut être amenée à porter contre une zone située centralement de l'une des pièces (9 ; 10) de forme en partie circulaire du manchon (5), l'autre pièce (9 ; 10) étant fixée en position dans le tube (4) de guidage à l'aide d'une protubérance (16).

8. Dispositif suivant la revendication 1, **caractérisé** en ce que le tube (4) de guidage s'étend au-delà du manchon (5) à une extrémité ou l'autre de celui-ci pour recevoir des douilles (15) de guidage avec le manchon (5) situé entre elles.
